(19) Europäisches Patentamt
European Patent Office
Office européen des brevets

(11) **EP 3 385 750 B1**

(12) **EUROPÄISCHE PATENTSCHRIFT**

(45) Veröffentlichungstag und Bekanntmachung des Hinweises auf die Patenterteilung:
**29.07.2020 Patentblatt 2020/31**

(51) Int Cl.:
***G01S 13/90*** *(2006.01)*

(21) Anmeldenummer: **18161919.8**

(22) Anmeldetag: **15.03.2018**

(54) **VERFAHREN UND VORRICHTUNG ZUR VERARBEITUNG VON SAR-ROHDATEN**

METHOD AND DEVICE FOR PROCESSING RAW SAR DATA

PROCÉDÉ ET DISPOSITIF DE TRAITEMENT DE DONNÉES BRUTES SAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2017 DE 102017205649**

(43) Veröffentlichungstag der Anmeldung:
**10.10.2018 Patentblatt 2018/41**

(73) Patentinhaber: **Deutsches Zentrum für Luft- und Raumfahrt e.V.**
**51147 Köln (DE)**

(72) Erfinder:
• **Villano, Michelangelo**
  **82205 Gilching (DE)**
• **Krieger, Gerhard**
  **82131 Gauting (DE)**
• **Moreira, Alberto**
  **82140 Olching (DE)**

(74) Vertreter: **Fink Numrich**
**Patentanwälte PartmbB**
**European Patent and Trademark Attorneys**
**Wendl-Dietrich-Straße 14**
**80634 München (DE)**

(56) Entgegenhaltungen:
**WO-A1-97/42520**

• **VISHAL RICHE ET AL: "Optimization of OFDM SAR signals for range ambiguity suppression", RADAR CONFERENCE (EURAD), 2012 9TH EUROPEAN, IEEE, 31. Oktober 2012 (2012-10-31), Seiten 278-281, XP032326837, ISBN: 978-1-4673-2471-7**
• **KIM JUNG-HYO ET AL: "Spaceborne MIMO Synthetic Aperture Radar for Multimodal Operation", IEEE TRANSACTIONS ON GEOSCIENCE AND REMOTE SENSING, IEEE SERVICE CENTER, PISCATAWAY, NJ, US, Bd. 53, Nr. 5, 1. Mai 2015 (2015-05-01), Seiten 2453-2466, XP011569144, ISSN: 0196-2892, DOI: 10.1109/TGRS.2014.2360148 [gefunden am 2015-01-07]**

**Beschreibung**

Die Erfindung betrifft ein Verfahren und eine Vorrichtung zur rechnergestützten Verarbeitung von SAR-Rohdaten.

SAR-Systeme (SAR = Synthetic Aperture Radar) ermöglichen die Fernerkundung der Erdoberfläche über die Erfassung von an der Erdoberfläche reflektierten Radarpulsen, die von einer Radareinrichtung ausgesendet werden, welche sich mit konstanter Geschwindigkeit über der Erdoberfläche in einer sog. Azimut-Richtung bewegt. Der Begriff der Erdoberfläche ist dabei weit zu verstehen und kann gegebenenfalls auch die Oberfläche eines anderen Himmelskörpers (vorzugsweise eines anderen Planeten) als der Erde betreffen.

Die mit einem SAR-System erfassten SAR-Rohdaten enthalten für eine Vielzahl der ausgesendeten Radarpulse, die mit entsprechenden Azimut-Positionen korrelieren, jeweils Datenabtastungen für eine Vielzahl von sog. Range-Positionen, welche unterschiedliche Abstände zwischen der Erdoberfläche und der Azimut-Richtung repräsentieren und demzufolge Radarechos aus unterschiedlichen Richtungen darstellen. Die Range-Positionen können als sog. Slant-Range (Schrägentfernung) oder als sog. Ground-Range (Bodenentfernung) angegeben werden. Die Slant-Range entspricht dabei dem Abstand der Radareinrichtung von der Erdoberfläche in der Richtung, aus welcher ein Radarecho empfangen wird. Die Ground-Range korrespondiert mit der Projektion der Slant-Range auf die Erdoberfläche. Beide Größen können ineinander umgerechnet werden.

In herkömmlichen SAR-Systemen besteht das Problem, dass in den SAR-Rohdaten eine Überlagerung von unterschiedlichen Radarpulsen durch gleichzeitigen Empfang von deren Echos auftreten kann, womit eine Verschlechterung der Qualität der prozessierten SAR-Bilder verbunden ist. Als besonders störend werden dabei Radarechos empfunden, welche vom Nadir, d.h. aus Richtung senkrecht zur Erdoberfläche, von der Radareinrichtung empfangen werden.

Um den gleichzeitigen Empfang von Radarechos in SAR-Systemen zu vermeiden, können die Pulswiederholrate der Radarpulse und die Lage bzw. Breite des mit dem SAR-System erfassten Streifens der Erdoberfläche geeignet aufeinander abgestimmt werden, wodurch Radarechos aus diesem Streifen immer zu unterschiedlichen Zeitpunkten empfangen werden. Hierdurch wird jedoch die Streifenbreite begrenzt. Ebenso ist es bekannt, die Radarpulse als Wellenformen auszusenden, welche orthogonal zueinander sind. Hierdurch wird der Effekt der Überlagerung von gleichzeitig empfangenen Echos zwar vermindert, jedoch kommt es nach wie vor zu einem deutlich wahrnehmbaren Qualitätsverlust in den SAR-Bildern.

Die Druckschrift VISHAL RICHE ET AL: "Optimization of OFDM SAR signals for range ambiguity suppression", RADAR CONFERENCE (EURAD), 2012 9TH EUROPEAN, IEEE, 31. Oktober 2012 (2012-10-31), Seiten 278-281, offenbart ein Verfahren gemäß dem Oberbegriff des Anspruchs 1. Dabei werden Range-Mehrdeutigkeiten rein über die Verwendung von Radarpulsen mit orthogonalen Wellenformen unterdrückt.

Die Druckschrift KIM JUNG-HYO ET AL: "Spaceborne MIMO Synthetic Aperture Radar for Multimodal Operation", IEEE TRANSACTIONS ON GEOSCIENCE AND REMOTE SENSING, IEEE SERVICE CENTER, PISCATAWAY, NJ, US, Bd. 53, Nr.5, 1. Mai 2015 (2015-05-01), Seiten 2453-2466, offenbart ein MIMO-SAR-System, bei dem Radarpulse über mehrere Sendeantennen ausgesendet und über mehrere Empfangsantennen empfangen werden.

In dem Dokument WO 97/42520 A1 ist ein Radarsystem beschrieben, bei dem Radarpulse ausgesendet werden, welche mehrere zusammenhängende Subpulse enthalten. Über Autokorrelationen und Kreuzkorrelationen werden Range-Mehrdeutigkeiten und Doppler-Mehrdeutigkeiten unterdrückt.

Aufgabe der Erfindung ist es, ein Verfahren und eine Vorrichtung zur rechnergestützten Verarbeitung von SAR-Rohdaten zu schaffen, welche zu einer verbesserten Unterdrückung von Störsignalen führen, die durch gleichzeitig empfangene Radarechos hervorgerufen sind.

Diese Aufgabe wird durch das Verfahren gemäß Patentanspruch 1 bzw. die Vorrichtung gemäß Patentanspruch 9 gelöst. Weiterbildungen der Erfindung sind in den abhängigen Ansprüchen definiert.

Das erfindungsgemäße Verfahren dient zur rechnergestützten Verarbeitung von SAR-Rohdaten, welche Radarechos von Radarpulsen umfassen, die von einer Radareinrichtung mit einer oder mehreren Radarantennen auf zumindest einem Flugobjekt ausgesendet wurden, welches sich in eine Azimut-Richtung über der Erdoberfläche bewegt. Die Radarechos wurden dabei durch die obige Radareinrichtung empfangen und erfasst. Demzufolge umfasst die Radareinrichtung sowohl eine oder mehrere Sendeantennen als auch eine oder mehrere Empfangsantennen, wobei eine jeweilige Antenne gegebenenfalls sowohl als Sendeantenne als auch als Empfangsantenne fungieren kann.

Der obige Begriff des zumindest einen Flugobjekts ist weit zu verstehen und kann in einer Variante ein einzelnes Flugobjekt mit einer darauf befindlichen Radareinrichtung umfassen. Ebenso kann das zumindest eine Flugobjekt zwei oder mehrere, sich synchron bewegende Flugobjekte umfassen, wobei sich in diesem Fall die Radareinrichtung auf mehrere Flugobjekte verteilt. Beispielsweise kann nur auf einem Flugobjekt eine Sendeantenne der Radareinrichtung vorgesehen sein, wobei jedoch in allen Flugobjekten Empfangsantennen für das Radarecho aus unterschiedlichen Blickwinkeln integriert sind.

Die SAR-Rohdaten enthalten für jeden Radarpuls Datenabtastungen für mehrere Range-Positionen, wobei die Range-Positionen unterschiedliche Abstände zwischen der Erdoberfläche und der Azimut-Richtung repräsentieren. Je nach Ausführungsform können die Range-Positionen als Slant-Range oder als Ground-Range angegeben werden. In den SAR-Rohdaten existieren zu einem jeweiligen Radarpuls ein Störradarecho und ein Störpuls. In diesem Sinne sind einem jeweiligen Radarpuls ein Störradarecho und ein Störpuls zugeordnet. Das Störradarecho ist ein Radarecho des Störpulses für eine erste Range-Position, d.h. das Radarecho des Störpulses stammt aus dieser ersten Range-Position. Das Störradarecho zeichnet sich dadurch aus, dass es gleichzeitig mit einem Radarecho des jeweiligen Radarpulses für eine zweite Range-Position (d.h. der Range-Position, aus der das Radarecho des jeweiligen Radarpulses stammt) durch die Radareinrichtung empfangen wird. Der Begriff des gleichzeitig empfangenen Störradarechos ist hier und im Folgenden derart zu verstehen, dass das Störradarecho unter Berücksichtigung der Auflösung in Range-Richtung (d.h. mit der Ungenauigkeit einer entsprechenden Auflösungszelle) eine (erste) Range-Position $R_0$ aufweist, welche folgende Bedingung erfüllt:

$$R_0 = R + k \frac{c_0}{2PRF}$$

Dabei bezeichnet $R$ die (zweite) Range-Position des Radarechos des jeweiligen Radarpulses. Ferner bezeichnet $k$ einen ganzzahligen Wert und $PRF$ entspricht der Pulswiederholfrequenz, mit der die Radarpulse ausgesendet werden. Darüber hinaus entspricht $c_0$ der Lichtgeschwindigkeit. Die obige Bedingung wird weiter unten nochmals speziell für das Nadir-Echo angegeben (siehe Gleichung (1)). Die erste und zweite Range-Position sind im Verfahren des Anspruchs 1 über alle Radarpulse und Störpulse hinweg gleich.

Der Störpuls gehört zu den durch die Radareinrichtung ausgesendeten Radarpulsen. Er ist jedoch ein anderer Radarpuls als der jeweilige Radarpuls, dem der Störpuls zugeordnet ist. Ferner weisen der Störpuls und der jeweilige Radarpuls orthogonale Wellenformen auf. Der Begriff der orthogonalen Wellenformen ist dem Fachmann hinlänglich bekannt. Orthogonale Wellenformen zeichnen sich dadurch aus, dass deren Skalarprodukt gleich null ist. Durch geeignete Variation der Wellenformen von ausgesendeten Radarpulsen kann diese Orthogonalität sichergestellt werden.

In einem Schritt a) des erfindungsgemäßen Verfahrens werden die SAR-Rohdaten mittels einer ersten Fokussierung auf die den jeweiligen Radarpulsen zugeordneten Störpulse fokussiert, wodurch erste fokussierte Daten erhalten werden. Dabei werden im Rahmen der ersten Fokussierung eine Range-Kompression und eine Azimut-Kompression durchgeführt. Die Methoden der Range- und Azimut-Kompression sind an sich bekannt und werden in der detaillierten Beschreibung näher erläutert. Die Range-Kompression wird durch das Anwenden eines Filters bzw. einer Filterung auf die Rohdaten jedes Radarpulses realisiert. Herkömmlicherweise ist diese Filterung an die Wellenform des jeweiligen Radarpulses angepasst. Erfindungsgemäß wird nunmehr in Schritt a) die Filterung derart verändert, dass sie nicht mehr an die Wellenform des jeweiligen Radarpulses, sondern an die Wellenform des dem jeweiligen Radarpuls zugeordneten Störpulses angepasst ist. Insbesondere wird die Filterung dabei dadurch realisiert, dass die Rohdaten des jeweiligen Radarpulses mit einer Funktion (zeitlich) gefaltet werden, die der zeitinvertierten und komplex-konjugierten Wellenform des zugeordneten Störpulses entspricht. Die Faltung wird vorzugsweise über eine Multiplikation im Frequenzraum der Signale bestimmt. Durch Schritt a) des erfindungsgemäßen Verfahrens werden somit erste fokussierte Daten erhalten, die auf das Störradarecho fokussiert sind.

In einem Schritt b) des erfindungsgemäßen Verfahrens werden die ersten fokussierten Daten einer Signalunterdrückung unterzogen, welche das nun fokussierte und damit lokal begrenzte Störradarecho zumindest teilweise unterdrückt, wodurch zweite fokussierte Daten erhalten werden. In an sich bekannter Weise werden in einem nächsten Schritt c) die zweiten fokussierten Daten einer Defokussierung unterzogen, wodurch veränderte SAR-Rohdaten erhalten werden. Die Defokussierung beinhaltet dabei eine Range-Dekompression und eine Azimut-Dekompression, welche invers zu der obigen Range- und Azimut-Kompression der ersten Fokussierung sind. Die entsprechenden Verfahren zur Range-Dekompression und Azimut-Dekompression sind dabei an sich bekannt. Im Rahmen der Range-Dekompression wird eine Filterung angewendet, welche invers zu der obigen Filterung der Range-Kompression ist. Insbesondere wird bei dieser Filterung eine Faltung des Signals des jeweiligen Radarpulses durchgeführt, welche im Frequenzraum einer Multiplikation des Signals mit dem Inversen des Komplex-Konjugierten der Wellenform des zugeordneten Störpulses entspricht.

Das erfindungsgemäße Verfahren zeichnet sich dadurch aus, dass die SAR-Rohdaten derart modifiziert werden, dass Störradarpulse, die gleichzeitig mit anderen Radarpulsen empfangen werden, in den Rohdaten unterdrückt werden. Man macht sich hierbei die Erkenntnis zu Nutze, dass ein Störpuls analog wie ein anderer Radarpuls in den Daten fokussiert werden kann und anschließend dieser fokussierte Puls geeignet unterdrückt werden kann. Aufgrund der orthogonalen Wellenformen des Störpulses und des zugehörigen Radarpulses bleiben die Bildinformationen des Nutzsignals bis auf eine minimale und damit vernachlässigbare Degradation erhalten.

In einer bevorzugten Variante des erfindungsgemäßen Verfahrens werden die veränderten Rohdaten mittels einer zweiten Fokussierung auf die jeweiligen Radarpulse fokussiert, wodurch dritte fokussierte Daten erhalten werden, die dann einem SAR-Radarbild entsprechen. Im Rahmen der zweiten Fokussierung werden eine an sich bekannte Range-Kompression und eine an sich bekannte Azimut-Kompression durchgeführt, wobei für die Range-Kompression eines jeweiligen Radarpulses nunmehr eine Filterung angewendet wird, die an die Wellenform des jeweiligen Radarpulses angepasst ist. Insbesondere werden die Rohdaten des jeweiligen Radarpulses dabei mit seiner zeitinvertierten und komplex-konjugierten Wellenform (zeitlich) gefaltet. Die soeben beschriebene Ausführungsform wird vorzugsweise immer dann verwendet, wenn nur ein Störpuls für jedes Radarecho zu unterdrücken ist.

In einer weiteren Variante der Erfindung ist es auch möglich, dass einem jeweiligen Radarpuls neben dem obigen Störpuls weitere Störpulse zugeordnet sind, zu denen eine im Vergleich zum obigen Störpuls unterschiedliche erste und/oder zweite Range-Position gehören. In diesem Fall können die Schritte a) bis c) iterativ für die jeweiligen weiteren Störpulse wiederholt werden, wobei zu Beginn jeder Wiederholung die SAR-Rohdaten mit den zuletzt erhaltenen veränderten SAR-Rohdaten gleichgesetzt werden. Nach Abschluss der Wiederholungen wird vorzugsweise die oben beschriebene zweite Fokussierung auf die erhaltenen veränderten Rohdaten angewendet, wodurch wiederum ein fokussiertes SAR-Bild erzeugt wird.

In einer besonders bevorzugten Ausführungsform ist das im erfindungsgemäßen Verfahren unterdrückte Störradarecho ein Nadir-Echo, dessen erste Range-Position dem kürzesten Abstand zwischen der Erdoberfläche und der Azimut-Richtung entspricht. Mit anderen Worten wird dieses Echo aus der Richtung senkrecht zur Erdoberfläche durch die Radareinrichtung empfangen und stammt somit vom Nadir. Üblicherweise enthalten SAR-Rohdaten nur ein einzelnes Nadir-Echo für einen jeweiligen Radarpuls. Das Nadir-Echo wird in SAR-Bildern als besonders störend empfunden und äußert sich in der Form eines hellen Streifens im fokussierten Bild.

In einer weiteren bevorzugten Ausführungsform sind die Radarpulse frequenzmodulierte und vorzugsweise lineare frequenzmodulierte Wellenformen. Diese Wellenformen werden üblicherweise als Chirps bezeichnet.

In einer bevorzugten Variante weisen alle Radarpulse die gleiche Pulsdauer auf, wobei die Wellenform eines ausgesendeten Radarpulses der zyklisch innerhalb der Pulsdauer verschobenen Wellenform des zuvor ausgesendeten Radarpulses entspricht. Eine zyklische Verschiebung ist dabei derart zu verstehen, dass der Radarpuls entlang der Zeitachse verschoben wird, wobei der Teil des Radarpulses, der aus dem Zeitfenster der Pulsdauer herauswandert, am anderen Ende des Zeitfensters hineingeschoben wird. Mittels einer solchen zyklischen Verschiebung können auf einfache Weise Radarpulse mit orthogonalen Wellenformen erreicht werden.

In einer weiteren Ausführungsform werden die orthogonalen Wellenformen der Radarpulse dadurch erreicht, dass die Radarpulse in sich wiederholenden Sequenzen von aufeinander folgenden Radarpulsen ausgesendet werden, wobei die Wellenformen $s_i(t)$ der Radarpulse innerhalb einer Sequenz wie folgt lauten:

$$s_i\left(t\right)=\begin{cases} e^{j\pi\frac{B}{T}\left(t-t_i-T\left(\left\lfloor\frac{t+\frac{T}{2}-t_i}{T}\right\rfloor\right)\right)^2}, & -\frac{T}{2}\leq t\leq\frac{T}{2} \\ \\ 0, & \text{sonst} \end{cases}$$

wobei $i$ die aufeinander folgenden Radarpulse der Sequenz indiziert und $i = 0, ..., 2BT\text{-}1$ gilt, wobei B die Bandbreite des Radarpulses darstellt und $T$ die Pulsdauer repräsentiert;
wobei

$$t_i=\frac{i\left(i+1\right)}{2B}-T\left\lfloor\frac{i\left(i+1\right)+BT}{2BT}\right\rfloor$$

gilt.

Der Ausdruck ⌊·⌋ stellt dabei die größte ganze Zahl dar, welche kleiner gleich dem Argument des Ausdrucks ist.

Die im erfindungsgemäßen Verfahren durchgeführte Signalunterdrückung kann auf verschiedene Weise realisiert werden. In einer Variante ist die Signalunterdrückung derart ausgestaltet, dass für einen jeweiligen Radarpuls die zweite Range-Position ermittelt wird und das Signal in den ersten fokussierten Daten im Wesentlichen nur an der zweiten Range-Position zumindest teilweise unterdrückt wird. Diese Variante wird vorzugsweise zur Unterdrückung des Nadir-Echos verwendet, denn die Position des Radarechos, das durch das Nadir-Echo gestört wird, kann auf einfache Weise bestimmt werden (siehe Gleichung (1) in der detaillierten Beschreibung).

In einer weiteren Variante des erfindungsgemäßen Verfahrens ist die Signalunterdrückung derart ausgestaltet, dass ein Schwellwert auf die Signale in den gesamten ersten fokussierten Daten angewendet wird, so dass alle Signale oberhalb des Schwellwerts auf den Schwellwert abgeschnitten werden oder alternativ die Signale nur an den Positionen, die den Schwellwert überschreiten, auf Null gesetzt werden und ansonsten unverändert bleiben. In diesem Fall müssen nicht mehr entsprechende Range-Positionen von Radarpulsen ermittelt werden, welche durch gleichzeitig empfangene Störradarechos gestört werden.

Neben dem oben beschriebenen Verfahren betrifft die Erfindung eine Vorrichtung zur rechnergestützten Verarbeitung von SAR-Rohdaten, welche Radarechos von Radarpulsen umfassen, die von einer Radareinrichtung auf zumindest einem Flugobjekt ausgesendet wurden, welches sich in einer Azimut-Richtung über der Erdoberfläche bewegt. Die Radarechos der Radarpulse wurden dabei durch die Radareinrichtung empfangen und erfasst, wobei die SAR-Rohdaten für jeden Radarpuls Datenabtastungen für mehrere Range-Positionen enthalten und die Range-Positionen unterschiedliche Abstände zwischen der Erdoberfläche und der Azimut-Richtung repräsentieren. In den SAR-Rohdaten existieren zu einem jeweiligen Radarpuls ein Störradarecho und ein Störpuls, wobei das Störradarecho ein Radarecho des Störpulses für eine erste Range-Position ist und das Störradarecho gleichzeitig mit einem Radarecho des jeweiligen Radarpulses für eine zweite Range-Position durch die Radareinrichtung empfangen wird. Der Störpuls ist ein anderer Radarpuls als der jeweilige Radarpuls. Ferner weisen der Störpuls und der jeweilige Radarpuls orthogonale Wellenformen auf.

Die erfindungsgemäße Vorrichtung ist derart ausgestaltet, dass sie zur Durchführung der Schritte a) bis c) des erfindungsgemäßen Verfahrens eingerichtet ist. Mit anderen Worten umfasst die Vorrichtung eine geeignete Signalverarbeitungseinheit, um die Schritte a) bis c) durchzuführen.

In einer besonders bevorzugten Ausführungsform ist die erfindungsgemäße Vorrichtung dazu eingerichtet, eine oder mehrere bevorzugte Varianten des erfindungsgemäßen Verfahrens durchzuführen.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Rechner ausgeführt wird.

Darüber hinaus umfasst die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Rechner ausgeführt wird.

Ein Ausführungsbeispiel der Erfindung wird nachfolgend anhand der beigefügten Figuren detailliert beschrieben.

Es zeigen:

Fig. 1    eine schematische Darstellung, anhand der das im Rahmen der Erfindung verwendete SAR-Prinzip erläutert wird;

Fig. 2    ein Ablaufdiagramm, das die Durchführung einer Variante des erfindungsgemäßen Verfahrens verdeutlicht; und

Fig. 3    ein Diagramm, welches die Wellenformen von Radarpulsen zeigt, die in einer Ausführungsform der Erfindung verwendet werden.

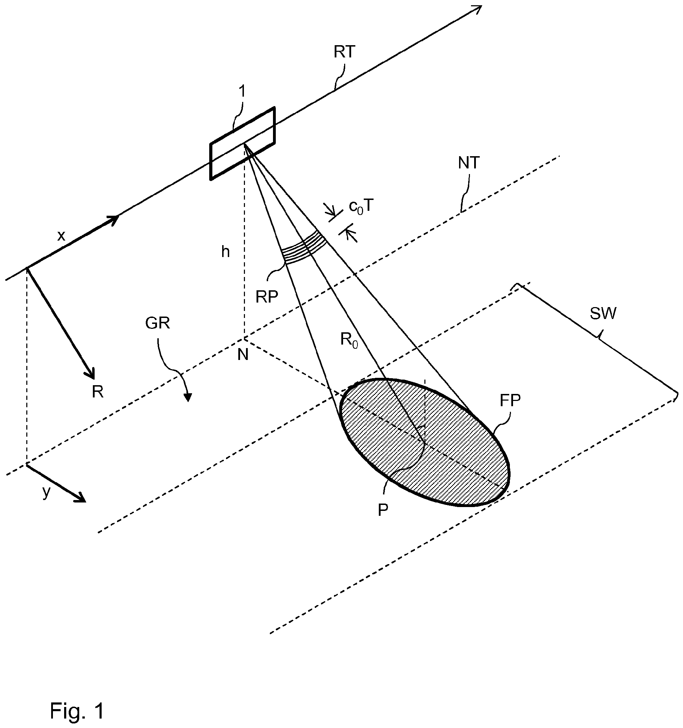

Fig. 1 zeigt in schematischer Darstellung eine SAR-Radareinrichtung 1, welche als rechteckige Apertur angedeutet ist und je nach Ausgestaltung eine oder mehrere Antennen umfasst. In dem dargestellten Szenario befindet sich die Radareinrichtung auf einem (nicht gezeigten) Satelliten, der sich in der Höhe h entlang der Radarbahn RT oberhalb der Erdoberfläche GR bewegt. Die Richtung der Radarbahn entspricht dabei der an sich bekannten Azimut-Richtung, die in Fig. 1 mit Bezugszeichen x bezeichnet ist. Anstatt die Radareinrichtung mittels eines Satelliten zu bewegen, besteht ggf. auch die Möglichkeit, hierzu ein anderes Flugobjekt zu verwenden, wie z.B. ein Flugzeug.

Die Radareinrichtung 1 sendet Radarpulse RP in aufeinander folgenden Pulswiederholintervallen mit vorgegebener Pulswiederholfrequenz in schräger Richtung auf die Erdoberfläche GR aus. Der größte Teil der Energie eines jeweiligen Radarpulses ist dabei auf die elliptische Fläche FP auf der Erdoberfläche gerichtet. Diese Fläche wird in der Regel als "Footprint" bzw. "Fußabdruck" der Radareinrichtung bzw. der zugeordneten Radarantenne bezeichnet.

Gemäß Fig. 1 weist ein jeweiliger Radarpuls RP eine vorgegebene Pulsdauer T auf, so dass der Radarpuls die räumliche Ausdehnung $c_0 T$ hat, wobei $c_0$ der Lichtgeschwindigkeit entspricht. Im Rahmen einer SAR-Messung werden von der Erdoberfläche zurückgestreute Radarechos der Radarpulse RP durch die Radareinrichtung 1 während ihrer Bewegung entlang der Bahn RT empfangen und erfasst. Auf diese Weise werden Informationen über die Erdoberfläche in dem Streifen SW (englisch: "swath") detektiert. Die Radareinrichtung ist dabei derart ausgestaltet, dass sie sowohl zum Aussenden von Radarpulsen als auch zum Empfang entsprechender Radarechos eingerichtet ist. Die von der Radareinrichtung erfassten Radarechos hängen von der Form und Beschaffenheit der Erdoberfläche ab und ermöglichen mit einer bekannten nachgeschalteten Signalverarbeitung die Berechnung von SAR-Bildern der Erdoberfläche.

Vor der nachgeschalteten Signalverarbeitung liegen die erfassten Radarechos nach einer Analog-Digital-Wandlung als sog. SAR-Rohdaten vor. Diese Rohdaten sind Datenabtastungen, welche die Amplitude und die Phase der abgetasteten Radarechos enthalten. Die Rohdaten sind dabei in einer zweidimensionalen Matrix angeordnet, wobei eine Dimension der Matrix dem jeweiligen ausgesendeten Radarpuls (repräsentiert durch eine Pulsnummer) entspricht und die andere Dimension der Matrix eine Zeitverzögerung repräsentiert, welche die Zeitdauer darstellt, die ein abgetastetes Radarecho zur Ausbreitung von der Radareinrichtung zur Erdoberfläche und zurück zur Radareinrichtung 1 benötigt. Mit anderen Worten wird durch diese Zeitdauer die sog. Slant-Range (Schrägentfernung) R repräsentiert, welche dem Abstand zwischen der Radareinrichtung und dem Streupunkt des Radarechos auf der Erdoberfläche entspricht. Dieser Abstand ist somit gleichzusetzen mit einer Richtung, aus der das abgetastete Radarecho von der Erdoberfläche GR zur Radareinrichtung 1 gelangt.

In dem Szenario der Fig. 1 ist beispielhaft die Reflexion eines Radarechos an dem Streupunkt P auf der Erdoberfläche angedeutet. Die Slant-Range dieses Radarechos ist dabei mit $R_0$ bezeichnet. Die Slant-Range steht in einer geometrischen Beziehung zu der sog. Ground-Range (Bodenentfernung), die in Fig. 1 mit y bezeichnet ist und dem Abstand zwischen der Nadir-Bahn NT und dem entsprechenden Streupunkt repräsentiert. Der Wert einer Slant-Range R kann somit eindeutig in den Wert einer entsprechenden Ground-Range y umgerechnet werden. Die Nadir-Bahn NT ist dabei die senkrechte Projektion der Radarbahn RT auf die Erdoberfläche GR. Die Position N auf der Bahn NT ist der sog. Nadir, d.h. der Punkt auf der Erdoberfläche mit dem kürzesten Abstand zur Radareinrichtung. Ein Radarecho von dem Nadir N wird als Nadir-Echo bezeichnet.

Wie bereits erwähnt, werden die SAR-Rohdaten einer nachgeschalteten Signalverarbeitung unterzogen. Je nach Ausgestaltung kann diese Signalverarbeitung bereits im Satelliten erfolgen, wobei anschließend die verarbeiteten Informationen zu einer Bodenstation auf der Erdoberfläche gesendet werden. Ebenso ist es möglich, dass die SAR-Rohdaten ohne Nachverarbeitung an eine Bodenstation übersendet werden, wobei in der Bodenstation die Nachverarbeitung durchgeführt wird, um aus den Rohdaten entsprechende SAR-Bilder zu gewinnen. Die Nachverarbeitung umfasst zwei Filter-Operationen, die entlang der Range-Richtung R bzw. y und entlang der Azimut-Richtung x durchgeführt werden. Die Filter-Operation entlang der Range-Richtung wird oftmals als Range-Kompression und die Filter-Operation entlang der Azimut-Richtung als Azimut-Kompression bezeichnet. Mit diesen Operationen wird eine Fokussierung der SAR-Rohdaten erreicht, um hierdurch SAR-Bilder zu berechnen.

Im Rahmen der Range-Kompression wird für die Datenabtastungen in Range-Richtung der Radarechos eines jeden Radarpulses ein signalangepasster Filter (englisch: "matched filter") angewendet, indem die Datenabtastungen entlang der Range-Richtung und damit entlang der Zeitachse mit der Funktion $h(t)$ gefaltet werden, die sich aus der komplex-konjugierten und zeitinvertierten Wellenform s($t$) des entsprechenden Radarpulses ergibt, d.h. es gilt:

$$h(t) = s^*(-t)$$

Mittels dieser Range-Kompression wird das SNR-Verhältnis (SNR = Signal to Noise Ratio) des Signals maximiert und der Streupunkt an der richtigen Range-Position lokalisiert.

Neben der Range-Kompression wird die oben genannte Azimut-Kompression durchgeführt. Wie die Range-Kompression ist auch die Azimut-Kompression an sich bekannt und wird deshalb nicht im Detail erläutert. Bei der Azimut-Kompression macht man sich die Tatsache zunutze, dass Streupunkte auf der Erdoberfläche mit unterschiedlichen Azimut-Winkeln in Bezug auf die Radarbahn RT aufgrund des Doppler-Effekts Frequenzverschiebungen in den Radarechos aufweisen. Durch die Analyse des Doppler-Frequenzspektrums kann ein Streupunkt auf der Erdoberfläche in der Azimut-Richtung lokalisiert werden. Die Azimut-Kompression führt somit zu einer Schärfung der Daten in der Azimut-Richtung.

Bei der SAR-Datenerfassung besteht das Problem, dass ein signifikantes Radarecho auch außerhalb des Streifens SW von dem Nadir N empfangen wird. In der Regel tritt deshalb der Fall auf, dass sich ein Radarecho für eine bestimmte Range-Position mit dem Nadir-Echo eines später ausgesendeten Radarpulses überlagert, da das Nadir-Echo aufgrund der kürzeren Laufstrecke zum gleichen Zeitpunkt wie das betrachtete Radarecho von der Radareinrichtung erfasst wird. Für die in Fig. 1 gezeigte Range-Position $R_0$ tritt ein Nadir-Echo dann auf, wenn folgende Bedingung erfüllt ist:

$$R_0 = h + k\frac{c_0}{2PRF} \qquad\qquad (1)$$

Dabei bezeichnet $k$ einen ganzzahligen Wert und *PRF* entspricht der Pulswiederholfrequenz, mit der die Radarpulse ausgesendet werden. $h$ ist die bereits eingangs erwähnte Höhe der Radareinrichtung über der Erdoberfläche GR und $c_0$ entspricht der Lichtgeschwindigkeit.

Obwohl die Radareinrichtung 1 die Energie in dem Streifen SW konzentrieren soll, lässt sich das Nadir-Echo aufgrund der speziellen Eigenschaften des Streuprozesses (spiegelnde Reflexion) nicht verhindern. Das Nadir-Echo kann unter Umständen stärker als das damit überlagerte Radarecho sein. Das Nadir-Echo kann somit die Qualität eines fokussierten SAR-Bildes deutlich verschlechtern. Das Nadir-Echo erscheint in dem SAR-Bild als ein heller Streifen an der Position auf der Erdoberfläche, die der Range-Position des Radarechos entspricht, welches durch das Nadir-Echo gestört wird.

Herkömmlicherweise werden Nadir-Echos in SAR-Bildern dadurch vermieden, dass die Pulswiederholfrequenz und die Lage bzw. Breite des erfassten Streifens auf der Erdoberfläche aufeinander abgestimmt werden, so dass die Nadir-Echos nicht innerhalb des Streifens auftreten. Hierdurch wird jedoch die Breite des Streifens begrenzt und ferner die Performanz des SAR-Systems in Bezug auf Mehrdeutigkeiten (englisch: "ambiguities") verschlechtert. Zur Verbesserung der Performanz kann es dabei erforderlich sein, die Komplexität des Systems zu erhöhen, z.B. indem die Größe der Radarantennen erhöht wird.

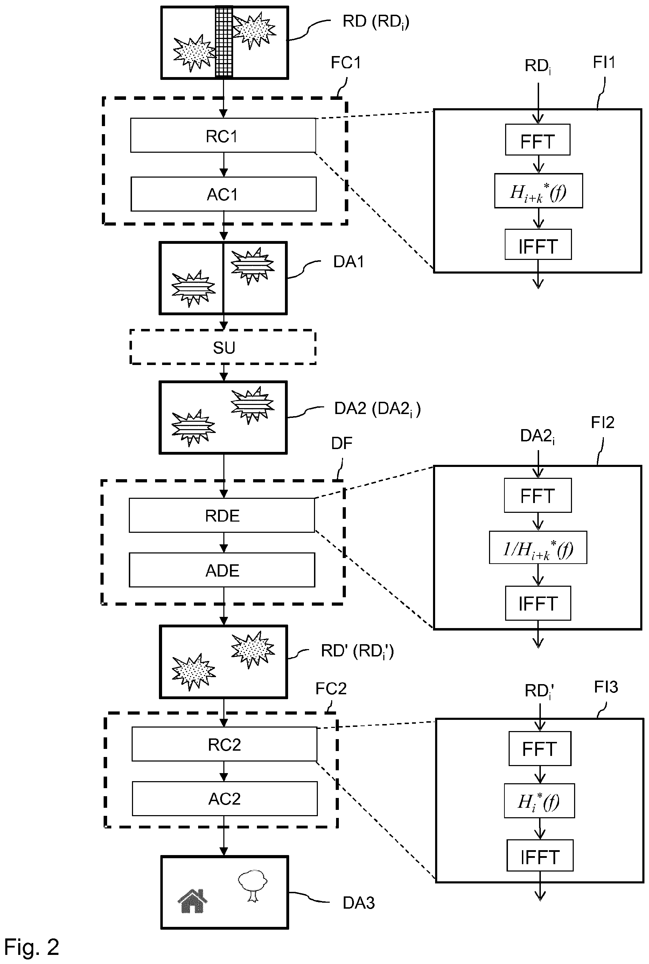

Im Rahmen der Erfindung wird ein neuer Ansatz bei der Signalverarbeitung der SAR-Rohdaten verwendet, um aus diesen Daten das Nadir-Echo zuverlässig zu entfernen. Dieser neue Ansatz wird nachfolgend anhand von Fig. 2 erläutert. Ausgangspunkt des Verfahrens der Fig. 2 sind die ursprünglich erfassten SAR-Rohdaten, welche mit RD bezeichnet sind. Wie bereits eingangs erwähnt, enthalten die SAR-Rohdaten für jeden Radarpuls Datenabtastungen für eine Vielzahl von Range-Positionen. Die Rohdaten für einen jeweiligen Radarpuls werden in Fig. 2 mit $RD_i$ bezeichnet, wobei i den entsprechenden Radarpuls indiziert. Beispielhaft werden die Rohdaten durch ein Bild repräsentiert, welches zwei Objekte in der Form eines Hauses und eines Baums enthält, wobei beide Objekte in den SAR-Rohdaten verschmiert sind, wie durch gepunktet dargestellte Kleckse angedeutet ist. Die Rohdaten enthalten ferner ein Nadir-Echo, welches durch einen breiten vertikalen Streifen an der Range-Position angedeutet ist, von der das Radarecho empfangen wird, welches sich mit dem Nadir-Echo überlagert. Dieser Streifen ist in Fig. 1 durch ein quadratisches Muster angedeutet.

Zur Realisierung des erfindungsgemäßen Verfahrens wurde bei der Erfassung der SAR-Rohdaten sichergestellt, dass Radarpulse in sich wiederholenden Sequenzen von zueinander orthogonalen Wellenformen ausgesendet werden, d.h. jedes Paar von Wellenformen innerhalb einer Sequenz weist ein Skalarprodukt von Null auf. In der hier beschriebenen Ausführungsform sind die Wellenformen innerhalb einer Sequenz zyklisch verschobene Chirps, wobei ein Chirp eine linear frequenzmodulierte Wellenform mit vorgegebener Pulsdauer ist. Ein entsprechender Chirp $s_i(t)$ ist dabei durch die folgende Gleichung gegeben:

$$s_i(t) = \begin{cases} e^{j\pi\frac{B}{T}\left(t-t_i-T\left(\left\lfloor\frac{t+\frac{T}{2}-t_i}{T}\right\rfloor\right)\right)^2}, & -\frac{T}{2} \le t \le \frac{T}{2} \\ 0, & \text{sonst} \end{cases} \qquad (2)$$

Dabei bezeichnet $T$ die Pulsdauer des Chirps, $B$ ist die Wellenform-Bandbreite (d.h. die Bandbreite der darin enthaltenen Frequenzen) und $i$ repräsentiert den i-ten Puls innerhalb einer Sequenz. Die Größe $t_i$ legt dabei die Größe der zyklischen Verschiebung fest, wobei $t_i$ wie folgt definiert ist:

$$t_i = \frac{i(i+1)}{2B} - T\left\lfloor\frac{i(i+1)+BT}{2BT}\right\rfloor, \ i = 0, ..., 2BT-1 \qquad (3)$$

Eine Sequenz enthält somit *2BT* Pulse, die sich durch zyklische Verschiebungen voneinander unterscheiden.

Eine zyklische Verschiebung bedeutet dabei, dass der Puls in Richtung der Zeitachse verschoben wird und der Abschnitt des Pulses, welcher hierdurch die Grenze der Pulsdauer bei T/2 überschreitet, am vorderen Ende der Pulsdauer bei -*T/2* hinzugefügt wird.

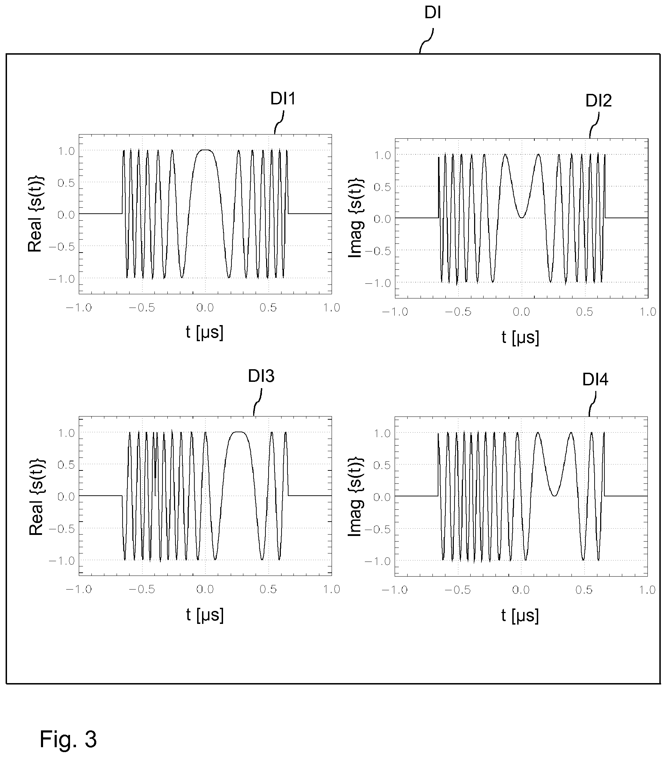

Die soeben beschriebene zyklische Verschiebung der Pulse zur Erreichung von orthogonalen Wellenformen ist in dem Diagramm DI der Fig. 3 angedeutet. Dabei zeigt das Teildiagramm DI1 den Realteil des obigen Pulses $s_0(T)$, wohingegen das Diagramm DI2 den Imaginärteil dieses Pulses wiedergibt. Demgegenüber zeigt das Diagramm DI3 den Realteil des Pulses für einen Index i, der einer Verschiebung von 0,3 µs entspricht, wohingegen das Diagramm DI4 den entsprechenden Imaginärteil wiedergibt. Aus den Diagrammen DI1 bis DI4 wird anschaulich ersichtlich, dass sowohl die Realteile als auch die Imaginärteile der Pulswellenformen innerhalb der Pulsdauer entlang der Zeitachse verschoben sind. Durch die Verwendung der obigen orthogonalen Wellenformen wird sichergestellt, dass das Nadir-Echo in der Verarbeitung der Fig. 2 eine Wellenform aufweist, die orthogonal zu der Wellenform des Pulses ist, der gleichzeitig mit dem Nadir-Echo ankommt.

In der Signalverarbeitung der Fig. 2 wird zunächst eine erste Fokussierung FC1 der SAR-Rohdaten durchgeführt. Im Rahmen dieser ersten Fokussierung wird eine erste Range-Kompression RC1 für die jeweiligen Pulse durchgeführt. Die rangekomprimierten Daten werden ferner mittels einer ersten Azimut-Kompression AC1 in Azimut-Richtung komprimiert. In Fig. 2 sind die Range-Kompression RC1 und die Azimut-Kompression AC1 und analog auch die Kompressionen RC2 und AC2 sowie die entsprechenden Dekompressionen RDE und ADE aus Übersichtlichkeitsgründen als separate Schritte dargestellt. In der Regel sind diese Kompressionen und entsprechend auch die Dekompressionen ineinander verschachtelt, um weitere Effekte, wie die an sich bekannte "range cell migration", zu korrigieren.

Im Rahmen der ersten Range-Kompression RC1 werden die entsprechenden SAR-Rohdaten $RD_i$ eines jeden Radarpulses einer ersten Filterung FI1 unterzogen. Bei einer solchen Filterung wird eine zeitliche Faltung durchgeführt, welche in der hier beschriebenen Ausführungsform im Frequenzraum berechnet wird. Hierzu werden die Rohdaten $RD_i$ zunächst einer FFT-Transformation (FFT = Fast-Fourier-Transformation) unterzogen und anschließend wird das dadurch enthaltene Signal mit der Fourier-Transformation einer Impulsantwort multipliziert. Im Unterschied zu einer herkömmlichen Range-Kompression basiert diese Impulsantwort dabei nicht auf dem gerade verarbeiteten i-ten Puls, sondern auf dem Radarpuls, der zu dem Nadir-Echo gehört. In dem dargestellten Szenario hat dieser Radarpuls den Index (i+k), d.h. es ist der k-te Radarpuls nach dem betrachteten i-ten Radarpuls.

Demzufolge erfolgt bei der Filterung FI1 eine Multiplikation mit der Funktion $H_{i+k}^*(f)$, welche die Fourier-Transformierte der Funktion $h_{i+k}(t) = s_{i+k}^*(-t)$ ist, wobei $s_{i+k}(t)$ dem zyklisch verschobenen Chirp des (i+k)-ten Radarpulses entspricht. Anschließend wird eine IFFT-Transformation (IFFT = Inverse Fast-Fourier-Transformation) durchgeführt. Nach Filterung aller Radarpulse folgt die erste Azimut-Kompression AC1, welche sich nicht von einer herkömmlichen Azimut-Kompression gemäß dem Stand der Technik unterscheidet und deshalb nicht im Detail beschrieben wird. Eine Besonderheit ist jedoch, dass diese Azimut-Kompression nicht auf die Bildentfernung des Nutzsignals sondern auf die Entfernung des Nadir-Echos abgestimmt ist. Man enthält schließlich erste Daten DA1 in der Form eines SAR-Bildes, in dem das Nadir-Echo fokussiert ist, ohne dass das Nutzsignal verloren geht. Mit anderen Worten enthalten die Daten DA1 nunmehr ein Nadir-Echo in der Form einer schmalen vertikalen Linie, wohingegen die Nutzdaten nahezu vollständig in der Form von Klecksen in dem Bild erhalten bleiben. Die Nutzdaten sind dabei zusätzlich verschmiert, was durch eine andere Schraffur der Klekse im Vergleich zu den Rohdaten RD angedeutet ist.

Die Daten DA1 werden anschließend einer Signalunterdrückung SU unterzogen. Da die Position des durch das Nadir-Echo gestörten Radarechos aus der Geometrie der SAR-Messung bekannt ist (siehe Gleichung (1)), wird in der hier beschriebenen Ausführungsform das Signal dediziert nur an dem Ort des gestörten Radarpulses in den Daten DA1 unterdrückt. Als Folge erhält man die Daten DA2 in der Form eines SAR-Bildes, in dem das Nadir-Echo entfernt ist. Die Abtastungen der Daten DA2 für einen Radarpuls mit Index i werden dabei mit $DA2_i$ bezeichnet.

Anschließend werden die Daten DA2 einer an sich bekannten Defokussierung DF unterzogen, welche eine Range-Dekompression RDE und eine Azimut-Dekompression ADE umfasst. Im Rahmen der Range-Dekompression wird eine inverse Filterung FI2 durchgeführt. Diese erfolgt wiederum im Frequenzraum. Es wird somit zuerst eine FFT-Transformation der Abtastungen $DA2_i$ durchgeführt, gefolgt von einer Multiplikation mit dem Kehrwert der obigen Funktion $H_{i+k}^*(f)$ sowie einer anschließenden IFFT-Transformation. Neben der Range-Dekompression RDE wird in an sich bekannter Weise die Azimut-Dekompression ADE auf die Daten angewendet. Da diese Azimut-Dekompression mit an sich bekannten Verfahren erfolgt, wird sie hier nicht im Detail beschrieben.

Nach der Defokussierung DF erhält man die veränderten Rohdaten RD', welche bis auf eine minimale Degradation den ursprünglichen Rohdaten RD entsprechen und aus welchen das Nadir-Echo entfernt ist. Diese veränderten Rohdaten RD' werden dann einer zweiten Fokussierung FC2 unterzogen, bei der im Rahmen der Range-Kompression RC2 nunmehr jedoch eine Filterung FI3 verwendet wird, welche an die jeweiligen Radarpulse angepasst ist. Im Rahmen dieser Filterung werden die veränderten Rohdaten $RD_i'$ eines jeweiligen Radarpulses wiederum einer FFT-Transformation unterzogen, wobei anschließend eine Multiplikation mit der Funktion $H_i^*(f)$ erfolgt, welche die Fourier-Transformierte der Funktion $h_i(t) = s_i^*(-t)$ ist, wobei $s_i(t)$ dem Chirp des betrachteten i-ten Radarpulses entspricht. Schließlich wird das Signal wiederum mit einer IFFT-Transformation in den Zeitraum transformiert. Neben der zweiten Range-Kompression RC2 wird in an sich bekannter Weise eine zweite Azimut-Kompression AC2 durchgeführt.

Durch die zweite Fokussierung FC2 erhält man schließlich dritte Daten DA3, welche einem fokussierten SAR-Bild entsprechen, welches nicht mehr das Nadir-Echo enthält. Wie man aus Fig. 2 erkennt, sind in diesem Bild nunmehr die beiden Objekte in der Form eines Hauses und eines Baums ersichtlich, ohne dass das Bild einen störenden Streifen enthält, der durch das Nadir-Echo hervorgerufen ist.

Die im Vorangegangenen beschriebene Ausführungsform der Erfindung weist eine Reihe von Vorteilen auf. Insbesondere wird im Rahmen der Prozessierung von SAR-Rohdaten zunächst eine erste Fokussierung auf das Nadir-Echo durchgeführt, indem die Filterung an die Wellenform des Pulses angepasst wird, dessen Radarecho dem Nadir-Echo entspricht. Auf diese Weise wird das Nadir-Echo fokussiert und kann in den dadurch erhaltenen Daten mit einer geeigneten Signalunterdrückung entfernt werden. Über eine anschließende Defokussierung werden veränderte Rohdaten ohne Nadir-Echo erhalten, die dann mit einer zweiten Fokussierung, nunmehr angepasst an das Nutzsignal, in das SAR-Bild gewandelt werden können, das dann kein Nadir-Echo mehr enthält. Es müssen somit keine Einschränkungen in Bezug auf die Pulswiederholfrequenz der Radarpulse beachtet werden und das Nadir-Echo kann im Wesentlichen vollständig entfernt werden. Durch die Verwendung von orthogonalen Wellenformen wird gleichzeitig sichergestellt, dass die Informationen aus den Nutzdaten mit einer vernachlässigbar kleinen Degradation erhalten bleiben.

Die obige Ausführungsform der Erfindung wurde anhand der Unterdrückung eines Nadir-Echos erläutert. Nichtsdestotrotz kann die Erfindung auch dazu verwendet werden, um sog. Range-Mehrdeutigkeiten (auch Entfernungsmehrdeutigkeiten oder englisch: "range ambiguities") aus SAR-Rohdaten zu entfernen. Range-Mehrdeutigkeiten treten dann auf, wenn innerhalb des von der Erdoberfläche erfassten Streifens Radarechos aus unterschiedlichen Range-Positionen gleichzeitig empfangen werden. Für eine Range-Position kann eine Range-Mehrdeutigkeit dabei an einer oder auch an mehreren anderen Range-Positionen auftreten. Um für eine vorgegebene Range-Position (mit zugeordnetem i-ten Radarpuls) solche Range-Mehrdeutigkeiten zu unterdrücken, werden iterativ für jede Range-Mehrdeutigkeit, die dann durch einen Störpuls mit dem Index (i+k) repräsentiert ist (wobei k ggf. auch negativ sein kann), die Schritte der Fig. 2 bis zum Erhalt des veränderten Radarechos RD' durchgeführt. Bei der Verarbeitung einer neuen Range-Mehrdeutigkeit werden dabei die Rohdaten RD mit den veränderten Rohdaten RD' gleichgesetzt. Die obigen Schritte können auch iterativ für mehrere Range-Positionen, bei denen jeweils Mehrdeutigkeiten an anderen Range-Positionen existieren, wiederholt werden. Im Unterschied zu der oben beschriebenen Signalunterdrückung für das Nadir-Echo basiert die Unterdrückung von Range-Mehrdeutigkeiten auf einem Schwellwert, wobei alle Signale, welche oberhalb des Schwellwerts innerhalb der Daten DA1 liegen, auf den Schwellwert abgeschnitten werden. Alternativ werden die Signale nur an den Positionen, die den Schwellwert überschreiten, auf Null gesetzt.

**Patentansprüche**

1. Verfahren zur rechnergestützten Verarbeitung von SAR-Rohdaten (RD), welche Radarechos von Radarpulsen (RP) umfassen, die von einer Radareinrichtung (1) auf zumindest einem Flugobjekt ausgesendet wurden, welches sich in eine Azimut-Richtung (x) über der Erdoberfläche (GR) bewegt, wobei die Radarechos der Radarpulse (RP) durch die Radareinrichtung (1) empfangen und erfasst wurden und wobei die SAR-Rohdaten (RD) für jeden Radarpuls (RP) Datenabtastungen für mehrere Range-Positionen enthalten, wobei die Range-Positionen unterschiedliche Abstände (R) zwischen der Erdoberfläche (GR) und der Azimut-Richtung (x) repräsentieren, wobei einem jeweiligen Radarpuls (RP) ein Störradarecho und ein Störpuls zugeordnet sind, wobei das Störradarecho ein Radarecho des Störpulses für eine erste Range-Position ist und das Störradarecho gleichzeitig mit einem Radarecho des jeweiligen Radarpulses (RP) für eine zweite Range-Position durch die Radareinrichtung (1) empfangen wird, wobei der Störpuls ein anderer Radarpuls (RP) als der jeweilige Radarpuls (RP) ist und wobei der Störpuls und der jeweilige Radarpuls (RP) orthogonale Wellenformen aufweisen, **dadurch gekennzeichnet, dass**

   a) die SAR-Rohdaten (RD) mittels einer ersten Fokussierung (FC1) auf die den jeweiligen Radarpulsen (RP) zugeordneten Störpulse fokussiert werden, wodurch erste fokussierte Daten (DA1) erhalten werden, wobei im Rahmen der ersten Fokussierung (FC1) eine Range-Kompression (RC1) und eine Azimut-Kompression (AC1) durchgeführt werden und dabei für die Range-Kompression (RC1) eines jeweiligen Radarpulses (RP) eine Filterung (FI1) angewendet wird, die an die Wellenform des zugeordneten Störpulses angepasst ist,

   b) die ersten fokussierten Daten (DA1) einer Signalunterdrückung (SU) unterzogen werden, welche das zugeordnete Störradarecho für jeden Radarpuls (RP) zumindest teilweise unterdrückt, wodurch zweite fokussierte Daten (DA2) erhalten werden;

   c) die zweiten fokussierten Daten (DA2) einer Defokussierung (DF) unterzogen werden, wodurch veränderte SAR-Rohdaten (RD') erhalten werden, wobei im Rahmen der Defokussierung (DF) eine Range-Dekompression (RDE) und eine Azimut-Dekompression (ADE) durchgeführt werden, welche invers zu der Range-Kompression (RC1) und der Azimut-Kompression (AC1) der ersten Fokussierung (FC1) sind.

2. Verfahren nach Anspruch 1, **dadurch gekennzeichnet, dass** die veränderten Rohdaten (RD') mittels einer zweiten Fokussierung (FC2) auf die jeweiligen Radarpulse (RP) fokussiert werden, wodurch dritte fokussierte Daten (DA3) erhalten werden, wobei im Rahmen der zweiten Fokussierung (FC2) eine Range-Kompression (RC2) und Azimut-Kompression (AC2) durchgeführt werden und dabei für die Range-Kompression (RC2) eines jeweiligen Radarpulses (RP) eine Filterung (FI3) angewendet wird, die an die Wellenform des jeweiligen Radarpulses (RP) angepasst ist.

3. Verfahren nach Anspruch 1 oder 2, **dadurch gekennzeichnet, dass** das Störradarecho des Störpulses ein Nadir-Echo ist, dessen erste Range-Position dem kürzesten Abstand zwischen der Erdoberfläche (GR) und der Azimut-Richtung (x) entspricht.

4. Verfahren nach einem der vorhergehenden Ansprüche, **dadurch gekennzeichnet, dass** die Radarpulse (RP) frequenzmodulierte und vorzugsweise linear frequenzmodulierte Wellenformen sind.

5. Verfahren nach einem der vorhergehenden Ansprüche, **dadurch gekennzeichnet, dass** alle Radarpulse (RP) die gleiche Pulsdauer (T) aufweisen und die Wellenform eines ausgesendeten Radarpulses (RP) der zyklisch innerhalb der Pulsdauer (PD) verschobenen Wellenform des zuvor ausgesendeten Radarpulses (RP) entspricht.

6. Verfahren nach einem der vorhergehenden Ansprüche, **dadurch gekennzeichnet, dass** die Radarpulse (RP) in sich wiederholenden Sequenzen von aufeinander folgenden Radarpulsen (RP) ausgesendet werden, wobei die Wellenformen $s_i(t)$ der Radarpulse (RP) innerhalb einer Sequenz wir folgt lauten:

$$s_i\left(t\right) = \begin{cases} e^{j\pi\frac{B}{T}\left(t-t_i-T\left(\left\lfloor\frac{t+\frac{T}{2}-t_i}{T}\right\rfloor\right)\right)^2}, & -\frac{T}{2} \leq t \leq \frac{T}{2} \\ \\ 0, & \text{sonst} \end{cases}$$

wobei $i$ die aufeinander folgenden Radarpulse (RP) der Sequenz indiziert und $i = 0, ..., 2BT-1$ gilt, wobei B die Bandbreite des Radarpulses (RP) darstellt und T die Pulsdauer (T) repräsentiert;
wobei

$$t_i = \frac{i(i+1)}{2B} - T\left\lfloor\frac{i(i+1)+BT}{2BT}\right\rfloor$$

gilt.

7. Verfahren nach einem der vorhergehenden Ansprüche, **dadurch gekennzeichnet, dass** die Signalunterdrückung (SU) derart ausgestaltet ist, dass für einen jeweiligen Radarpuls (RP) die zweite Range-Position ermittelt wird und das Signal in den ersten fokussierten Daten (DA1) im Wesentlichen nur an der zweiten Range-Position zumindest teilweise unterdrückt wird.

8. Verfahren nach einem der vorhergehenden Ansprüche, **dadurch gekennzeichnet, dass** die Signalunterdrückung (SU) derart ausgestaltet ist, dass ein Schwellwert auf die Signale in den gesamten ersten fokussierten Daten (DA1) angewendet wird, so dass alle Signale oberhalb des Schwellwerts auf den Schwellwert abgeschnitten werden oder so dass die Signale nur an den Positionen, die den Schwellwert überschreiten, auf Null gesetzt werden.

9. Vorrichtung zur rechnergestützten Verarbeitung von SAR-Rohdaten (RD), welche Radarechos von Radarpulsen (RP) umfassen, die von einer Radareinrichtung (1) auf zumindest einem Flugobjekt ausgesendet wurden, welches sich in eine Azimut-Richtung (x) über der Erdoberfläche (GR) bewegt, wobei die Radarechos der Radarpulse (RP) durch die Radareinrichtung (1) empfangen und erfasst wurden und wobei die SAR-Rohdaten (RD) für jeden Radarpuls (RP) Datenabtastungen für mehrere Range-Positionen enthalten, wobei die Range-Positionen unterschiedliche Abstände (R) zwischen der Erdoberfläche (GR) und der Azimut-Richtung (x) repräsentieren, wobei einem jeweiligen Radarpuls (RP) ein Störradarecho und ein Störpuls zugeordnet sind, wobei das Störradarecho ein Radarecho des Störpulses für eine erste Range-Position ist und das Störradarecho gleichzeitig mit einem Radarecho des jeweiligen Radarpulses (RP) für eine zweite Range-Position durch die Radareinrichtung (1) empfangen wird, wobei der Störpuls ein anderer Radarpuls (RP) als der jeweilige Radarpuls (RP) ist und wobei der Störpuls und der jeweilige Radarpuls (RP) orthogonale Wellenformen aufweisen, wobei die Vorrichtung dazu eingerichtet ist, ein Verfahren durchzuführen, **dadurch gekennzeichnet, dass**

a) die SAR-Rohdaten (RD) mittels einer ersten Fokussierung (FC1) auf die den jeweiligen Radarpulsen (RP) zugeordneten Störpulse fokussiert werden, wodurch erste fokussierte Daten (DA1) erhalten werden, wobei im Rahmen der ersten Fokussierung (FC1) eine Range-Kompression (RC1) und eine Azimut-Kompression (AC1) durchgeführt werden und dabei für die Range-Kompression (RC1) eines jeweiligen Radarpulses (RP) eine Filterung (FI1) angewendet wird, die an die Wellenform des zugeordneten Störpulses angepasst ist,

b) die ersten fokussierten Daten (DA1) einer Signalunterdrückung (SU) unterzogen werden, welche das zugeordnete Störradarecho für jeden Radarpuls (RP) zumindest teilweise unterdrückt, wodurch zweite fokussierte Daten (DA2) erhalten werden;

c) die zweiten fokussierten Daten (DA2) einer Defokussierung (DF) unterzogen werden, wodurch veränderte SAR-Rohdaten (RD') erhalten werden, wobei im Rahmen der Defokussierung (DF) eine Range-Dekompression (RDE) und eine Azimut-Dekompression (ADE) durchgeführt werden, welche invers zu der Range-Kompression (RC1) und der Azimut-Kompression (AC1) der ersten Fokussierung (FC1) sind.

**10.** Vorrichtung nach Anspruch 9, welche derart ausgestaltet ist, dass mit der Vorrichtung ein Verfahren nach einem der Ansprüche 2 bis 8 durchführbar ist.

**11.** Computerprogrammprodukt mit einem auf einem maschinenlesbaren Träger gespeicherten Programmcode zur Durchführung eines Verfahrens nach einem der Ansprüche 1 bis 8, wenn der Programmcode auf einem Rechner ausgeführt wird.

**12.** Computerprogramm mit einem Programmcode zur Durchführung eines Verfahrens nach einem der Ansprüche 1 bis 8, wenn der Programmcode auf einem Rechner ausgeführt wird.

**Claims**

**1.** A method for computer-aided processing of SAR raw data (RD) which includes radar echoes of radar pulses (RP) which were emitted by a radar device (1) on at least one flying object moving in an azimuth direction (x) above the earth's surface (GR), wherein the radar echoes of the radar pulses (RP) were received and detected by the radar device (1) and wherein the SAR raw data (RD) contains data samples for a plurality of range positions for each radar pulse (RP), wherein the range positions represent different distances (R) between the earth's surface (GR) and the azimuth direction (x), wherein an interference radar echo and an interference pulse are associated with a respective radar pulse (RP), wherein the interference radar echo is a radar echo of the interference pulse for a first range position and the interference radar echo is received by the radar device (1) simultaneously with a radar echo of the respective radar pulse (RP) for a second range position, wherein the interference pulse is a different radar pulse (RP) than the respective radar pulse (RP) and wherein the interference pulse and the respective radar pulse (RP) have orthogonal waveforms, **characterized in that**

a) the SAR raw data (RD) is focused by means of a first focusing (FC1) on the interference pulses associated with the respective radar pulses (RP), thereby obtaining first focused data (DA1) wherein a range compression (RC1) and an azimuth compression (AC1) are carried out during the first focusing (FC1), and in the process, a filtering (FI1) is applied for the range compression (RC1) of a respective radar pulse (RP), said filtering being adapted to the waveform of the associated interference pulse,

b) the first focused data (DA1) is subjected to a signal suppression (SU) which at least partially suppresses the associated interference radar echo for each radar pulse (RP), whereby second focused data (DA2) is obtained;

c) the second focused data (DA2) is subjected to a defocusing (DF), whereby modified SAR raw data (RD') is obtained, wherein during the defocusing (DF) a range decompression (RDE) and an azimuth decompression (ADE) are carried out, which are inverse to the range compression (RC1) and the azimuth compression (AC1) of the first focusing (FC1).

2. The method according to claim 1, **characterized in that** the modified raw data (RD') is focused by means of a second focusing (FC2) on the respective radar pulses (RP), whereby third focused data (DA3) is obtained, wherein a range compression (RC2) and an azimuth compression (AC2) are carried out during the second focusing (FC2), and in the process, a filtering (FI3) is applied for the range compression (RC2) of a respective radar pulse (RP), said filtering being adapted to the waveform of the respective radar pulse (RP).

3. The method according to claim 1 or 2, **characterized in that** the interference radar echo of the interference pulse is a nadir echo whose first range position corresponds to the shortest distance between the earth's surface (GR) and the azimuth direction (x).

4. The method according to one of the preceding claims, **characterized in that** the radar pulses (RP) are frequency modulated and preferably linear frequency modulated waveforms.

5. The method according to one of the preceding claims, **characterized in that** all radar pulses (RP) have the same pulse duration (T) and the waveform of an emitted radar pulse (RP) corresponds to the waveform of the previously emitted radar pulse (RP) cyclically shifted within the pulse duration (PD).

6. The method according to one of the preceding claims, **characterized in that** the radar pulses (RP) are emitted in repeating sequences of successive radar pulses (RP), the waveforms of the radar pulses (RP) within a sequence being as follows:

$$s_i(t) = \begin{cases} e^{j\pi\frac{B}{T}\left(t-t_i-T\left(\left|\frac{t+\frac{T}{2}-t_i}{T}\right|\right)\right)^2}, & -\frac{T}{2} \le t \le \frac{T}{2} \\ 0, & \text{else} \end{cases}$$

where i indicates the successive radar pulses (RP) of the sequence and $i=0, ..., 2BT$-1, where B represents the bandwidth of the radar pulse (RP) and T represents the pulse duration (T); wherein

$$t_i = \frac{i(i+1)}{2B} - T\left\lfloor\frac{i(i+1)+BT}{2BT}\right\rfloor.$$

7. The method according to one of the preceding claims, **characterized in that** the signal suppression (SU) is implemented in such a way that the second range position is determined for a respective radar pulse (RP) and the signal in the first focused data (DA1) is at least partially suppressed essentially only at the second range position.

8. The method according to one of the preceding claims, **characterized in that** the signal suppression (SU) is implemented in such a way that a threshold value is applied to the signals in the entire first focused data (DA1) so that all signals above the threshold value are truncated to the threshold value or so that the signals are set to zero only at the positions exceeding the threshold value.

9. A device for computer-aided processing of SAR raw data (RD) which includes radar echoes of radar pulses (RP) which were emitted by a radar device (1) on at least one flying object moving in an azimuth direction (x) above the earth's surface (GR), wherein the radar echoes of the radar pulses (RP) were received and detected by the radar device (1) and wherein the SAR raw data (RD) contains data samples for a plurality of range positions for each radar pulse (RP), wherein the range positions represent different distances (R) between the earth's surface (GR) and the azimuth direction (x), wherein an interference radar echo and an interference pulse are associated with a respective radar pulse (RP), wherein the interference radar echo is a radar echo of the interference pulse for a first range position and the interference radar echo is received by the radar device (1) simultaneously with a radar echo of the respective radar pulse (RP) for a second range position, wherein the interference pulse is a different radar pulse (RP) than the respective radar pulse (RP) and wherein the interference pulse and the respective radar pulse (RP) have orthogonal waveforms, wherein the device is adapted to perform a method, **characterized in that**

a) the SAR raw data (RD) is focused by means of a first focusing (FC1) on the interference pulses associated with the respective radar pulses (RP), thereby obtaining first focused data (DA1) wherein a range compression (RC1) and an azimuth compression (AC1) are carried out during the first focusing (FC1), and in the process, a filtering (FI1) is applied for the range compression (RC1) of a respective radar pulse (RP), said filtering being adapted to the waveform of the associated interference pulse,

b) the first focused data (DA1) is subjected to a signal suppression (SU) which at least partially suppresses the associated interference radar echo for each radar pulse (RP), whereby second focused data (DA2) is obtained;

c) the second focused data (DA2) is subjected to a defocusing (DF), whereby modified SAR raw data (RD') is obtained, wherein during the defocusing (DF) a range decompression (RDE) and an azimuth decompression (ADE) are carried out, which are inverse to the range compression (RC1) and the azimuth compression (AC1) of the first focusing (FC1).

10. The device according to claim 9, which is designed in such a way that a method according to one of claims 2 to 8 can be carried out with the device.

11. A computer program product with a program code stored on a machine-readable support for carrying out a method according to one of the claims 1 to 8 when the program code is executed on a computer.

12. A computer program comprising a program code for performing a method according to one of the claims 1 to 8 when the program code is executed on a computer.

## Revendications

1. Procédé de traitement assisté par ordinateur de données brutes SAR (RD) qui comprennent des échos radar d'impulsions radar (RP) qui ont été émises par un dispositif radar (1) sur au moins un objet volant qui se déplace dans une direction azimutale (x) au-dessus de la surface de la terre (GR), où les échos radar des impulsions radar (RP) ont été reçus et détectés par le dispositif radar (1) et où les données brutes SAR (RD) pour chaque impulsion radar (RP) contiennent des échantillons de données pour une pluralité de positions en portée, où les positions en portée représentent différentes distances (R) entre la surface de la terre (GR) et la direction azimutale (x), où un écho radar parasite et une impulsion parasite sont associés à une impulsion radar respective (RP), où l'écho radar parasite est un écho radar de l'impulsion parasite pour une première position en portée et l'écho radar parasite est reçu par le dispositif radar (1) simultanément avec un écho radar de l'impulsion radar respective (RP) pour une deuxième position en portée, où l'impulsion parasite est une impulsion radar (RP) différente de l'impulsion radar respective (RP) et où l'impulsion parasite et l'impulsion radar respective (RP) ont des formes d'onde orthogonales, **caractérisé en ce que**

a) les données brutes SAR (RD) sont focalisées au moyen d'une première focalisation (FC1) sur les impulsions parasites associées aux impulsions radar (RP) respectives, ce qui permet d'obtenir des premières données focalisées (DA1), où une compression en portée (RC1) et une compression azimutale (AC1) sont effectuées dans le cadre de la première focalisation (FC1) et un filtrage (FI1) adapté à la forme d'onde de l'impulsion parasite associée est appliqué pour la compression en portée (RC1) d'une impulsion radar (RP) respective ;

b) les premières données focalisées (DA1) sont soumises à une suppression de signal (SU) qui supprime au moins partiellement l'écho radar parasite associé pour chaque impulsion radar (RP), ce qui permet d'obtenir des secondes données focalisées (DA2) ;

c) les deuxièmes données focalisées (DA2) sont soumises à une défocalisation (DF), ce qui permet d'obtenir des données brutes SAR modifiées (RD'), où, dans le cadre de la défocalisation (DF), on effectue une décompression en portée (RDE) et une décompression azimutale (ADE) qui sont inverses de la compression en portée (RC1) et de la compression azimutale (AC1) de la première focalisation (FC1).

2. Procédé selon la revendication 1, **caractérisé en ce que** les données brutes modifiées (RD') sont focalisées sur les impulsions radar respectives (RP) au moyen d'une deuxième focalisation (FC2), ce qui permet d'obtenir des troisièmes données focalisées (DA3), où une compression en portée (RC2) et une compression azimutale (AC2) sont effectuées dans le cadre de la deuxième focalisation (FC2), et, ce faisant, un filtrage (FI3) adapté à la forme d'onde de l'impulsion radar (RP) respective est appliqué pour la compression en portée (RC2) d'une impulsion radar (RP) respective.

3. Procédé selon la revendication 1 ou 2, **caractérisé en ce que** l'écho radar parasite de l'impulsion parasite est un écho de nadir, dont la première position en portée correspond à la distance la plus courte entre la surface de la terre (GR) et la direction azimutale (x).

**4.** Procédé selon l'une des revendications précédentes, **caractérisé en ce que** les impulsions radar (RP) sont des formes d'onde modulées en fréquence et de préférence modulées en fréquence linéaire.

**5.** Procédé selon l'une des revendications précédentes, **caractérisé en ce que** toutes les impulsions radar (RP) ont la même durée d'impulsion (T) et la forme d'onde d'une impulsion radar émise (RP) correspond à la forme d'onde de l'impulsion radar (RP) précédemment émise, décalée cycliquement à l'intérieur de la durée d'impulsion (PD).

**6.** Procédé selon l'une des revendications précédentes, **caractérisé en ce que** les impulsions radar (RP) sont émises en séquences répétitives d'impulsions radar (RP) successives, où les formes d'onde des impulsions radar (RP) dans une séquence se présentent comme suit

$$s_i(t) = \begin{cases} e^{j\pi\frac{B}{T}\left(t-t_i-T\left(\left|\frac{t+\frac{T}{2}-t_i}{T}\right|\right)\right)^2}, & -\frac{T}{2} \le t \le \frac{T}{2} \\ \\ 0, & \text{autrement} \end{cases}$$

où i indique les impulsions radar successives (RP) de la séquence et $i$=0, ..., $2BT$-1, où B représente la largeur de bande de l'impulsion radar (RP) et T représente la durée de l'impulsion (T); où

$$t_i = \frac{i(i+1)}{2B} - T\left\lfloor \frac{i(i+1)+BT}{2BT} \right\rfloor.$$

**7.** Procédé selon l'une des revendications précédentes, **caractérisé en ce que** la suppression du signal (SU) est conçue de telle manière que la deuxième position en portée est déterminée pour une impulsion radar respective (RP) et que le signal dans les premières données focalisées (DA1) n'est supprimé au moins partiellement qu'à la deuxième position en portée.

**8.** Procédé selon l'une des revendications précédentes, **caractérisé en ce que** la suppression de signal (SU) est conçue de telle sorte qu'une valeur seuil est appliquée aux signaux dans l'ensemble des premières données focalisées (DA1) de sorte que tous les signaux au-dessus de la valeur seuil sont coupés à la valeur seuil ou de sorte que les signaux sont mis à zéro uniquement aux positions dépassant la valeur seuil.

**9.** Dispositif de traitement assisté par ordinateur de données brutes SAR (RD) comprenant des échos radar d'impulsions radar (RP) qui ont été émises par un dispositif radar (1) sur au moins un objet volant qui se déplace dans une direction azimutale (x) au-dessus de la surface de la terre (GR), où les échos radar des impulsions radar (RP) ont été reçus et détectés par le dispositif radar (1) et où les données brutes SAR (RD) pour chaque impulsion radar (RP) contiennent des échantillons de données pour une pluralité de positions en portée, où les positions en portée représentent différentes distances (R) entre la surface de la terre (GR) et la direction azimutale (x), où un écho radar parasite et une impulsion parasite sont associés à une impulsion radar respective (RP), où l'écho radar parasite est un écho radar de l'impulsion parasite pour une première position en portée et l'écho radar parasite est reçu par le dispositif radar (1) simultanément avec un écho radar de l'impulsion radar respective (RP) pour une deuxième position en portée, où l'impulsion parasite est une impulsion radar (RP) différente de l'impulsion radar respective (RP) et où l'impulsion parasite et l'impulsion radar respective (RP) ont des formes d'onde orthogonales, où le dispositif est conçu pour effectuer un procédé, **caractérisé en ce que**

a) les données brutes SAR (RD) sont focalisées au moyen d'une première focalisation (FC1) sur les impulsions parasites associées aux impulsions radar (RP) respectives, ce qui permet d'obtenir des premières données focalisées (DA1), où une compression en portée (RC1) et une compression azimutale (AC1) sont effectuées dans le cadre de la première focalisation (FC1) et un filtrage (FI1) adapté à la forme d'onde de l'impulsion parasite associée est appliqué pour la compression en portée (RC1) d'une impulsion radar (RP) respective ;
b) les premières données focalisées (DA1) sont soumises à une suppression de signal (SU) qui supprime au moins partiellement l'écho radar parasite associé pour chaque impulsion radar (RP), ce qui permet d'obtenir des secondes données focalisées (DA2) ;
c) les deuxièmes données focalisées (DA2) sont soumises à une défocalisation (DF), ce qui permet d'obtenir des données brutes SAR modifiées (RD'), où, dans le cadre de la défocalisation (DF), on effectue une décompression en portée (RDE) et une décompression azimutale (ADE) qui sont inverses de la compression en portée (RC1) et de la compression azimutale (AC1) de la première focalisation (FC1).

**10.** Dispositif selon la revendication 9, qui est conçu de telle sorte qu'un procédé selon l'une des revendications 2 à 8 puisse être réalisée avec le dispositif.

**11.** Produit de programme informatique comprenant un code de programme stocké sur un support lisible par machine pour exécuter un procédé selon l'une des revendications 1 à 8 lorsque le code de programme est exécuté sur un ordinateur.

**12.** Programme informatique comprenant un code de programme pour mettre en œuvre un procédé selon l'une des revendications 1 à 8 lorsque le code de programme est exécuté sur un ordinateur.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9742520 A1

**In der Beschreibung aufgeführte Nicht-Patentliteratur**

- Optimization of OFDM SAR signals for range ambiguity suppression. **VISHAL RICHE et al.** RADAR CONFERENCE (EURAD). IEEE, 31. Oktober 2012, 278-281

- Spaceborne MIMO Synthetic Aperture Radar for Multimodal Operation. **KIM JUNG-HYO et al.** IEEE TRANSACTIONS ON GEOSCIENCE AND REMOTE SENSING. IEEE SERVICE CENTER, 01. Mai 2015, vol. 53, 2453-2466